# EUROPÄISCHE PATENTANMELDUNG

(11) **EP 3 913 791 A1**
(43) Veröffentlichungstag der Anmeldung: **24.11.2021**
(21) Anmeldenummer: 20175742.4
(22) Anmeldetag: 20.05.2020
(51) Int. Cl.: H02P 27/06, H02P 29/60

(54) **MEHRSYSTEMMOTOR FÜR DIE VERBINDUNG MIT EINEM WECHSELSPANNUNGS- ODER GLEICHSPANNUNGSNETZ**

(71) Anmelder: Siemens Aktiengesellschaft, 80333 München (DE)
(72) Erfinder: Kuhn, Harald, 90482 Nürnberg (DE); Köllensperger, Peter, 90425 Nürnberg (DE); Tischmacher, Hans, 91207 Lauf (DE); Tsotoulidis, Savvas, 90491 Nürnberg (DE)

(57) **Zusammenfassung**

Die Erfindung betrifft einen Mehrsystemmotor (1) zum Betreiben an einem Wechselspannungsnetz oder einem Gleichspannungsnetz. Zur Verbesserung des Betriebs an einem beliebigen Energieversorgungsnetz (8) wird vorgeschlagen, dass der Mehrsystemmotor (1) eine Halbleitereinheit (2) und einen Wechselstrommotor (3) aufweist, wobei die Halbleitereinheit (2) und der Wechselstrommotor (3) eine bauliche Einheit bilden und zumindest teilweise von einem gleichen Kühlmittelstrom durchflossen werden, wobei die Halbleitereinheit eine Gleichrichtschaltung (21), einen Zwischenkreiskondensator (22) und eine Wechselrichterschaltung (23) aufweist, wobei eine Gleichspannungsseite der Gleichrichtsschaltung (21), eine Gleichspannungsseite der Wechselrichterschaltung (23) und der Zwischenkreiskondensator (22) miteinander verbunden sind und einen Gleichspannungszwischenkreis (24) bilden, wobei wechselspannungsseitige Anschlüsse der Gleichrichtschaltung (21) Anschlüsse (11) des Mehrsystemmotors (1) bilden, wobei wechselspannungsseitige Anschlüsse der Wechselrichterschaltung (23) mit Wicklungen des Wechselstrommotors (3) verbunden sind, wobei die Anschlüsse (11) des Mehrsystemmotors (1) für einen Anschluss mit einem Wechselspannungsnetz oder einem Gleichspannungsnetz eingerichtet sind. Die Erfindung betrifft ferner ein Verfahren zum Betreiben eines derartigen Mehrsystemmotors (1).

## Beschreibung

Die Erfindung betrifft einen Mehrsystemmotor zum Betreiben an einem Wechselspannungsnetz oder einem Gleichspannungsnetz. Ferner betrifft die Erfindung ein Verfahren zum Betreiben eines derartigen Mehrsystemmotors.

Prinzipiell können Motoren in Gleichstrom- (DC) und Wechselstrom (AC)-Motoren (z.B. Synchron- / Asynchronmotoren) unterschieden werden. In der Vergangenheit, zu Beginn der Automatisierung, wurden wegen des technologischen Fortschritts und gleichzeitiger mangelnder Kenntnis und Verfügbarkeit von schaltenden Halbleitern Gleichstrommotoren weit verbreitet eingesetzt. Der Gleichstrommotor war zusätzlich wegen der einfachen Regelbarkeit der bevorzugte Motor des letzten Jahrhunderts. Microcontroller zur aufwändigen Regelung, beispielsweise mit Verfahren zur Achsentransformation, waren erst zum Ende des letzten Jahrhunderts marktreif entwickelt und für den Einsatz verfügbar. Diese Regelbarkeit wurde durch den komplizierten Aufbau, beispielsweise einer mechanische d,q-Transformation, erkauft. Aufgrund des heutigen Standes der Technik in Bezug auf Halbleiter, Umrichter, Rechenleistung von Microcontroller werden heutzutage auch aufgrund der besseren Regelbarkeit, Robustheit gegen Verschmutzung und Kostenvorteilen Wechselstrommotoren eingesetzt. Sie gelten derzeit als wirtschaftlicher. In Vorfeld-Untersuchungen wird aktuell der Einsatz von Wechselstrommotoren in Gleichspannungsnetzen bei größeren, lokalen Industrieanlagen untersucht. Es wird also erwartet, dass in Zukunft Antriebslösungen vom Markt gefordert werden, die sowohl in Wechselspannungsnetzen als auch in Gleichspannungsnetzen betrieben werden können. Ein Gleichspannungsnetz wird oftmals auch als DC-Netz, ein Wechselspannungsnetz als AC-Netz bezeichnet.

Derzeit werden oftmals Motoren in Kombination mit Stromrichtern eingesetzt, die auf den jeweiligen Anwendungsfall angepasst sind. Die unterschiedlichen Motortypen werden dabei von separaten leistungselektronischen Energiewandlern mit elektrischer Energie versorgt. Derzeit sind Energieübertragungsnetze und Energieverteilungsnetz meist von der Quelle bis zum Verbraucher, wie beispielsweise einem Antriebssystem, in Wechselspannung ausgeführt ist. Erst innerhalb des Antriebssystems wird durch einen Gleichrichter, dessen Schaltung auch als Gleichrichtschaltung bezeichnet wird, die Wechselspannung in eine Gleichspannung gleichgerichtet, um durch den Wechselrichter den drehzahlvariablen, geregelten Antrieb zu ermöglichen. An der flächendeckenden Energieübertragung mit Wechselspannung wird sich zunächst großflächig nichts ändern, jedoch wird aktuell diskutiert und erprobt, in Industriegebieten oder Bauwerken, Gleichspannungsnetze zu errichten. Mit diesen können dann ebenfalls beispielsweise elektrische Antriebe versorgt werden. Auf eine entsprechende Gleichrichtung kann dann verzichtet werden. Auf diese Weise können Kosten für die dezentralen Gleichrichter im elektrischen Antrieb gespart werden. Gleichzeitig können weiterhin die etablierten Wechselstrommotoren eingesetzt werden. Folgende Kombinationen kommen heute bereits zur Anwendung:
AC-Motor an AC-Netz mit Drehzahlvariation:
   AC Motor mit AC-AC-Frequenzumrichter
AC-Motor an DC-Netz mit Drehzahlvariation:
   AC Motor mit DC-AC-Frequenzumrichter
DC-Motor an DC-Netz mit Drehzahlvariation:
   DC Motor mit DC-DC-Steller
DC-Motor an AC-Netz mit Drehzahlvariation:
   DC Motor mit AC-DC-Steller

Darüber hinaus erfolgt zumeist auch eine Anpassung der Umrichter/Steller auf die Anforderungen des Antriebs bzw. des Motors, so dass sich eine Vielzahl an möglichen Kombinationen ergibt.

Der Erfindung liegt die Aufgabe zugrunde, einen Motor hinsichtlich seines Betriebs an Wechselspannungsnetzen und Gleichspannungsnetzen zu verbessern.

Diese Aufgabe wird durch einen Mehrsystemmotor zum Betreiben an einem Wechselspannungsnetz oder einem Gleichspannungsnetz aufweisend eine Halbleitereinheit und einen Wechselstrommotor gelöst, wobei die Halbleitereinheit und der Wechselstrommotor eine bauliche Einheit bilden und zumindest teilweise von einem gleichen Kühlmittelstrom durchflossen werden, wobei die Halbleitereinheit eine Gleichrichtschaltung, einen Zwischenkreiskondensator und eine Wechselrichterschaltung aufweist, wobei eine Gleichspannungsseite der Gleichrichtschaltung, eine Gleichspannungsseite der Wechselrichterschaltung und der Zwischenkreiskondensator miteinander verbunden sind und einen Gleichspannungszwischenkreis bilden, wobei wechselspannungsseitige Anschlüsse der Gleichrichtschaltung Anschlüsse des Mehrsystemmotors bilden, wobei wechselspannungsseitige Anschlüsse der Wechselrichterschaltung mit mindestens einer Wicklung des Wechselstrommotors verbunden sind, wobei die Anschlüsse des Mehrsystemmotors für einen Anschluss mit einem Wechselspannungsnetz oder einem Gleichspannungsnetz eingerichtet sind. Ferner wird diese Aufgabe durch ein Verfahren zum Betreiben eines derartigen Mehrsystemmotors gelöst, wobei der Mehrsystemmotor mit einem Wechselspannungsnetz oder einem Gleichspannungsnetz verbunden ist, wobei im Falle eines Wechselspannungsnetzes eine an den Anschlüssen anliegende Wechselspannung in eine Gleichspannung im Gleichspannungszwischenkreis gleichgerichtet wird und im Falle eines Gleichspannungsnetzes eine an den Anschlüssen oder an den weiteren Anschlüssen anliegende Gleichspannung in eine Gleichspannung in den Gleichspannungszwischenkreis übertragen wird, wobei aus der Gleichspannung im Gleichspannungszwischenkreis mittels der Wechselrichterschaltung eine Spannung an den wechselspannungsseitigen Anschlüssen der Wechselrichterschaltung erzeugt wird.

Vorteilhafte Ausgestaltungen der Erfindung sind in den abhängigen Ansprüchen angegeben.

Der Erfindung liegt unter anderem die Erkenntnis zugrunde, dass sich die Variantenvielfalt für Motoren und Umrichter dadurch reduzieren lässt, dass anstelle von Wechselstrommotoren oder Gleichspannungsmotoren Mehrsystemmotoren zum Einsatz kommen. Diese Mehrsystemmotoren weisen in ihrer baulichen Einheit neben einem Wechselstrommotor eine Halbleitereinheit auf. In dieser baulichen Einheit werden die Komponenten Halbleitereinheit und Wechselstrommotor zumindest teilweise vom gleichen Kühlmittelstrom durchflossen. Damit ist es möglich, den Mehrsystemmotor derart kompakt zu bauen, dass er hinsichtlich seiner Baugröße einem Motor für den Betrieb an einer Gleichspannung, also einem Gleichstrommotor, oder für den Betrieb an einer Wechselspannung, also einem Wechselstrommotor, entspricht oder zumindest nur unwesentlich größer, beispielsweise ca. 10% mehr Bauvolumen, ist. Dabei ist der Mehrsystemmotor dazu geeignet, mit einem Gleichspannungsnetz oder einem Wechselspannungsnetz verbunden zu werden, ohne dass bauliche Veränderungen an dem Motor vorgenommen werden müssen.

Der Betrieb des vorgeschlagenen Mehrsystemmotors ist dabei ohne bauliche Veränderungen sowohl an einem Gleichspannungsnetz, auch als DC-Netz bezeichnet, als auch an einem Wechselspannungsnetz, auch als AC-Netz bezeichnet, möglich. Der Mehrsystemmotor ist also einfach mit seinen Anschlüssen mit einem Wechselspannungsnetz und einem Gleichspannungsnetz verbindbar, jedoch nicht gleichzeitig mit beiden Netzen sofern er keine weiteren Anschlüsse aufweist. Der Begriff des Wechselspannungsnetzes umfasst dabei sowohl ein einphasiges Wechselspannungsnetz als auch ein mehrphasiges Wechselspannungsnetz, wie beispielsweise ein dreiphasiges Drehspannungs- oder Drehstromnetz.

Durch den Aufbau des kompakten Mehrsystemmotors kann dieser an einem Wechselspannungsnetz oder einem Gleichspannungsnetz eingesetzt werden. Die Gleichrichtschaltung der Halbleitereinheit wandelt dabei eine an den Anschlüssen des Mehrsystemmotors anliegende Wechselspannung in eine Gleichspannung im Zwischenkreis, d.h. am Zwischenkreiskondensator, um. Liegt jedoch an den Anschlüssen des Mehrsystemmotors eine Gleichspannung an, so wird diese ebenfalls mit Hilfe der Gleichrichtanschaltung verpolungssicher an den Zwischenkreiskondensator übertragen. Verpolungssicher bedeutet in diesem Zusammenhang, dass unabhängige von der Polarität der Spannung diese immer in eine Spannung mit gleicher Polarität am Zwischenkreiskondensator umgewandelt wird. Beschädigungen aufgrund einer vertauschten Verbindung der Potentiale des Gleichspannungsnetzes sind mit diesem Mehrsystemmotor zuverlässig ausgeschlossen.

Dabei kann mit Hilfe einer steuerbaren Gleichrichtschaltung die Spannung am Zwischenkreiskondensator geregelt werden. Dies ist insbesondere dann der Fall, wenn die Gleichrichtschaltung schaltbare Leistungshalbleiter wie Thyristoren oder Transistoren aufweist. Auch die Gruppe der abschaltbaren Halbleiter, wie beispielsweise IGBT, MOSFET, usw., bildet eine Teilmenge der schaltbaren Halbleiter. Schaltbare Halbleiter sind durch einen Steuerbefehl einschaltbar, während abschaltbare Halbleiter sowohl einschaltbar als auch abschaltbar sind. Mit einer geregelten und damit vorgebbaren Zwischenkreisspannung am Zwischenkreiskondensator kann das Betriebsverhalten von Wechselrichterschaltung, Wechselstrommotor optimiert werden. Die Optimierung kann dabei beispielsweise im Hinblick auf Verluste oder Geräusche des Mehrsystemmotors erfolgen, indem der Aussteuergrad aufgrund der variablen Zwischenkreisspannung frei gewählt werden kann.

Alternativ oder ergänzend ist es möglich, eine ungesteuerte Gleichrichtschaltung für die Umwandlung der Wechselspannung in die Gleichspannung bzw. für den Verpolungsschutz der DC Netzanschlussverbindung zu verwenden. Mit der ungesteuerten Gleichrichtschaltung ist die Steuerung des Mehrsystemmotors deutlich weniger komplex, einfacher aufgebaut und damit günstiger herstellbar. Zumindest im Nominalbetrieb, d.h. innerhalb des festgelegten Eingangsspannungsbereichs, ist ein Betrieb mit einer ungesteuerten Gleichrichtschaltung einschränkungsfrei an den Betrieb des Mehrsystemmotors möglich.

Vom Gleichspannungszwischenkreis erfolgt durch die Wechselrichterschaltung die Umwandlung der Spannung bzw. Ströme des Zwischenkreises in Wechselgrößen, die für den Betrieb des Wechselstrommotors notwendig sind. Insbesondere die Frequenz und die Amplitude der wechselspannungsseitigen Anschlüsse der Wechselrichterschaltung können durch die Regelung vorgegeben und beeinflusst werden.

Für den Wechselstrommotor ist es dann unerheblich, ob er an einem Gleichspannungsnetz oder einem Wechselspannungsnetz betrieben wird. Er ist universell an allen Netzen, d.h. an Gleichspannungsnetzen und Wechselspannungsnetzen einsetzbar. Somit kann ein sich immer größer werdender Markt für die Versorgung mit Gleichspannung mit einem Standardmotor abgedeckt werden, ohne eine Anpassung auf die physikalischen Eigenschaften des Netzes vornehmen zu müssen. Die Mehrsystemmotoren können in hoher Stückzahl unabhängig vom Einsatzort und den Einsatzbedingen produziert werden. Damit kann ein Kostenvorteil gegenüber der Konkurrenz erzielt werden.

Das hat darüber hinaus zusätzlich den Vorteil, mit dem Mehrsystemmotor auch DC-Retrofit-Geschäft bedienen zu können, bei dem DC-Motoren, die das Ende ihrer Lebensdauer erreicht haben oder diesem näher kommen, durch zuverlässige, in hoher Stückzahl produzierter Mehrsystemmotoren ersetzt werden können. Eine Entwicklung einer Kleinserie oder sogar eine projektspezifische Entwicklung, die eine Menge Ressourcen bindet und damit teuer ist, kann verzichtet werden. Der hier vorgestellte Mehrsystemmotor sowie das Verfahren zu dessen Betrieb stellt einen drehzahlveränderlichen integrierten Motor mit der Funktionalität dar, die es ermöglicht, sowohl an einem Gleichspannungsnetz als auch an einem Wechselspannungsnetz betrieben werden zu können. Somit können sämtliche oben genannten Anwendungen mit einem Motor-Prinzip abgedeckt werden: Retrofit von zu tauschenden DC-Motoren, Antriebslösungen an Wechselspannungsnetzen sowie Antriebslösungen an Gleichspannungsnetzen.

Bei einer vorteilhaften Ausgestaltung der Erfindung wird die Gleichrichtschaltung durch eine ungesteuerte Diodenbrücke gebildet. Für die Diodenbrücke sind keine Ansteuersignale und somit auch keine Ansteuer- bzw. Steuer- oder Regelungsbaugruppe erforderlich. Der Mehrsystemmotor kann daher mit hoher Zuverlässig betrieben und kostengünstig hergestellt werden. Dabei ist der Mehrsystemmotor insbesondere hinsichtlich seiner Komponenten Halbleitereinheit und Wechselstrommotor derart dimensioniert, dass über einen festgelegten Eingangsspannungsbereich, der beispielsweise der Nennspannung des Energieversorgungsnetzes, entspricht, der Betrieb des Mehrsystemmotors einschränkungsfrei, das heißt über seinen gesamten mechanischen Arbeitsbereich, möglich ist.

Bei einer weiteren vorteilhaften Ausgestaltung der Erfindung bilden Potenziale des Gleichspannungszwischenkreises weitere Anschlüsse des Mehrsystemmotors, wobei die weiteren Anschlüsse für einen Anschluss an ein Gleichspannungsnetz eingerichtet sind. Mit den Potenzialen des Gleichspannungszwischenkreises sind die Potenziale an den Anschlüssen des Zwischenkreiskondensators gemeint. Der Zwischenkreis weist meistens unter anderem auch zur niederinduktiven Verbindung mit den Halbleitern eine Verschienung auf, wobei die Verschienung zwei Stromschienen umfasst. Zwischen den beiden Stromschienen liegt die Zwischenkreisspannung, d.h. die Spannung des Zwischenkreiskondensators, an. Als weitere Anschlüsse wird jeweils eine Verbindung zu den jeweiligen Stromschienen des Zwischenkreises aus dem Innern des Mehrsystemmotors herausgeführt. Diese weiteren Anschlüsse bieten die Möglichkeit, den Mehrsystemmotor mit einem Gleichspannungsnetz zu verbinden. Diese weiteren Anschlüsse haben gegenüber den zuvor beschrieben Anschlüssen den Vorteil, dass der Gleichstrom keinen Spannungsabfall über Halbleiter erfährt, wenn er dem Gleichspannungszwischenkreis zugeführt wird. Somit erreicht der Mehrsystemmotor einen höheren Wirkungsgrad und kann dadurch verlustärmer und effizienter betrieben werden.

Ein weiterer Vorteil dieser Anordnung besteht darin, dass der Mehrsystemmotor gleichzeitig mit einem Wechselspannungsnetz und einem Gleichspannungsnetz verbunden werden kann. Dabei erfolgt der Anschluss mit dem Wechselspannungsnetz, insbesondere mit dem dreiphasigen Drehstromnetz, über die Anschlüsse, die wechselspannungsseitig mit der Gleichrichtschaltung verbunden sind. Das Gleichspannungsnetz ist über die weiteren Anschlüsse mit dem Mehrsystemmotor verbunden. Auf diese Weise kann der Motor redundant sowohl aus dem Gleichspannungsnetz als auch aus dem Wechselspannungsnetz mit elektrischer Energie versorgt werden. Durch diese Redundanz erhöht sich die Verfügbarkeit des Motors, da bei Ausfall eines der Energieversorgungsnetze der Mehrsystemmotor immer noch betrieben werden kann.

Bei der Verwendung von schaltbaren Halbleitern in der Gleichrichtschaltung kann auch die Energieentnahme aus den Netzen gesteuert oder geregelt werden. So ist es möglich, nur aus einem der beiden Netze Energie für den Betrieb des Mehrsystemmotors zu entnehmen. Alternativ oder ergänzend ist es darüber auch möglich, die für den Betrieb des Mehrsystemmotors notwendige Energie beiden Netzen zu entnehmen. Damit kann eine besonders zuverlässige Energieversorgung sichergestellt werden. Darüber hinaus kann je nach Belastungssituation der angeschlossenen Netze der Energiebezug aus diesen beiden angeschlossenen Energieversorgungsnetzen variabel angepasst werden. Die Energieversorgungsnetze werden damit zuverlässig vor einer Überlastung durch den Mehrsystemmotor geschützt.

Bei einer weiteren vorteilhaften Ausgestaltung der Erfindung wird die Amplitude und/oder die Frequenz der an den wechselseitigen Anschlüssen der Wechselrichterschaltung erzeugten Spannung in Abhängigkeit von in einer Regeleinheit gespeicherten Parametern und/oder erfassten Messwerten gesteuert oder geregelt. Damit kann das Verhalten des Motors direkt von der Regelung beeinflusst werden. Beispielsweise kann sich der Mehrsystemmotor dann wie ein Gleichspannungsmotor verhalten. Dabei kann das Verhalten sowohl eines Reihenschlussmotors als auch ein Nebenschlussmotors realisiert werden. Dann bestimmt sich das Drehmoment in erster Linie aus der Gleichspannung des Gleichspannungsnetzes und gegebenenfalls aus der Gegen-EMK des Motors. Somit können nicht nur unterschiedliche Motorarten wie Gleichstrommotor und Wechselstrommotor durch den Mehrsystemmotor nachgebildet werden, sondern auch das Verhalten unterschiedlicher Gleichstrommotoren wie Reihenschlussmaschine und Nebenschlussmaschine können in der Regelung über unterschiedliche Parametersätze derart hinterlegt werden, dass sämtliche Motoraufbauten durch die Regelung nachgebildet werden können. Dazu werden die charakteristischen Kennlinien für einen ungeregelten Betrieb durch die Regeleinheit des Mehrsystemmotors nachgebildet.

Ebenso ist es möglich, das Verhalten eines Wechselstrommotors über Parameter anpassbar zu gestalten. So kann beispielsweise die Drehzahl und das Drehmoment des Motors derart variabel angepasst werden, wie es sich sonst nur aus unterschiedlichen Polpaarzahlen ergibt. Die Polpaarzahl ist jedoch direkt mit dem Aufbau des Motors verknüpft, eine Änderung ist ohne konstruktive Änderungen des Motors nicht möglich. Durch den Aufbau des Mehrsystemmotors ist es jedoch möglich, mit Hilfe der Halbleitereinheit und einer Regeleinheit ein entsprechendes Verhalten, was sich aus unterschiedlichen Polpaarzahlen ergibt auf einfache und kostengünstige Weise nachzubilden.

Mit anderen Worten kann das Verhalten des Mehrsystemmotors auf einfache Weise mittels Parameter dem Verhalten eines gewünschten Motoraufbaus, wie beispielsweise einem Wechselstrom- oder Drehstrommotor sowie einer Reihenschluss- oder Nebenschlussmaschine, nachgebildet werden. Somit können mit einem standardisierten Aufbau des Mehrsystemmotors eine Vielzahl von unterschiedlichen Antriebsaufgaben bedient werden, für die sonst oftmals eine projektspezifische Lösung gefunden werden musste.

Durch den vorgeschlagenen Mehrsystemmotor können alle diese unterschiedlichen Aufgaben mit nur einem Aufbau durch Anpassung des Regelverhaltens mittels der Regeleinheit realisiert werden.

Bei einer weiteren vorteilhaften Ausgestaltung der Erfindung wird die Drehzahl oder das Drehmoment des Wechselstrommotors in Abhängigkeit von der Spannung an den Anschlüssen und/oder den weiteren Anschlüssen des Mehrsystemmotors gesteuert oder geregelt. Die Steuerung des Drehmomentes und damit auch bei gegebenem Lastmoment die Steuerung der Drehzahl in Abhängigkeit von der Spannungshöhe vorgenommen. Die Spannungshöhe stellt gerade bei einem Gleichstrommotor die Stellgröße für die Drehzahl dar. Die Regeleinheit erzeugt in Abhängigkeit von der Eingangsspannung an den Anschlüssen des Mehrsystemmotors eine derartige Spannung an den wechselspannungsseitigen Anschlüssen der Wechselrichtschaltung, dass ein entsprechendes Verhalten eines Gleichstrommotors, insbesondere die Kennlinie eines gewünschten Gleichstrommotors, an der Welle des Gleichstrommotors erzeugt wird.

Bei einer weiteren vorteilhaften Ausgestaltung der Erfindung wird mittels der Regeleinheit das Drehmoment des Wechselstrommotors derart gesteuert, dass vorgegebene Grenzwerte für den Netzstrom unterschritten werden. Motoren, die direkt ohne Steller wie beispielsweise einem Stromrichter oder einem Gleichspannungssteller am Energieversorgungsnetz betrieben werden, weisen beim Einschalten oftmals sehr hohe Anlaufströme auf. Dafür sind bereits verschiedene Möglichkeiten zur Begrenzung dieser Anlaufströme wie beispielsweise Anlaufwiderstände oder Stern-/Dreieckumschaltungen für die Anlaufphase bekannt. Durch die Halbleitereinheit des Mehrsystemmotors können diese Anlaufströme jedoch auch mit Hilfe der Regeleinheit reduziert werden. Ebenso ist es möglich, die Anlaufphase des Mehrsystemmotors derart zu gestalten, dass dieser mit zulässigen Strömen, die unterhalb der Maximalströme liegen, auf Nenndrehzahl beschleunigt wird. Somit wird die Beschleunigungszeit, d.h. die Anlaufzeit, deutlich reduziert und der Mehrsystemmotor kann dann nach Abschluss der Hochlaufzeit, d.h. nach Erreichen seiner Nenndrehzahl, wie ein direkt gespeister Motor am Energieversorgungsnetz, sowohl an einem Gleichspannungsnetz als auch an einem Wechselspannungsnetz, betrieben werden. Durch die Regelung der Anlaufströme auf die maximal zulässigen Ströme für den Motor kann die Hochlaufphase durch das hohe Drehmoment verkürzt und optimiert werden, so dass der Mehrsystemmotor schnellstmöglich seine Nenndrehzahl erreicht. Zudem kann auf einfache Weise sichergestellt werden, dass das Energieversorgungsnetz nicht überlastet wird und Schutzvorrichtungen, wie beispielsweise Sicherungen, nicht aktiviert werden.

Bei einer weiteren vorteilhaften Ausgestaltung der Erfindung erfolgt mittels der Regeleinheit eine Beschleunigung des Motors mit vorgegebenen Netzströmen. Mit Hilfe der Regeleinheit des Mehrsystemmotors ist es möglich, die Hochlaufphase oder jede beliebige Beschleunigungsphase des Mehrsystemmotors zu beeinflussen und zu optimieren. Dabei kann der Mehrsystemmotor besonders netzfreundlich ausgelegt werden, indem die Netzströme derart geregelt werden, dass sie das Energieversorgungsnetz nur mäßig belasten. Gerade für den Fall, dass das Energieversorgungsnetz bereits einer hohen Belastung durch andere elektrische Verbraucher unterliegt, kann die Belastung und damit eine drohende Überlastung des Energieversorgungsnetzes dadurch vermieden werden, dass eine Beschleunigung des Mehrsystemmotors mit vorgegebenen Netzströmen erfolgt. Dabei können in vorteilhafter Weise die vorgegebenen Netzströme in Abhängigkeit von der Belastung des Energieversorgungsnetzes vorgegeben werden. Dadurch ist es möglich, gerade bei großen Antrieben mit einer Leistung von mehr als 100kW, insbesondere bei mehr als 1MW, eine Überlastung des Energieversorgungsnetzes und damit den Ausfall einer Vielzahl von elektrischen Verbrauchern zu vermeiden.

Bei einer weiteren vorteilhaften Ausgestaltung der Erfindung wird mittels der Regeleinheit zumindest in einem stationären Betriebspunkt ein ungesteuerter Betrieb eines DC-Motors an einem Gleichspannungsnetz oder eines AC-Motors an einem Wechselspannungsnetz nachgebildet. Die Nachbildung erfolgt beispielsweise anhand der Kennlinien, die sich für den ungesteuerten Betrieb des Motors an einem Energieversorgungsnetz ergeben. Alternativ oder ergänzend ist es möglich, den Motor mittels Parameter eines Ersatzschaltbildes nachzubilden. Die Regeleinheit bildet dabei eine Spannung in Amplitude und Frequenz an den wechselspannungsseitigen Anschlüssen der Wechselrichterschaltung derart nach, dass sich das ungeregelte Verhalten eines entsprechenden Motors ergibt. Somit können unterschiedliche Verhaltenskennlinien, die sich aufgrund von Unterschieden im Aufbau der Motoren ergeben, durch die Software der Regeleinheit nachgebildet werden. Eine Anpassung der Kennlinien erfolgt dann in der Software, so dass sich mit dem vorgeschlagenem Mehrsystemmotor eine Vielzahl von Kennlinien nachgebildet werden können, die sich durch unterschiedliche Motoraufbauten realisieren lassen. Anders ausgedrückt, lassen sich eine Vielzahl unterschiedlicher Motorvarianten mit einem gleichen Aufbau, aber unterschiedlichen Parametern, insbesondere unterschiedlichen Regelparametern, realisieren. Durch den standardisierten Aufbau und die Abdeckung von Speisung aus Wechsel- und Gleichspannung kann diese Vielfalt auf besonders kostengünstige Weise realisiert werden. Ebenso kann aufgrund des Stückzahleneffekts auch ein zuverlässiger Betrieb des Antriebs auch für Spezialanwendungen mit geringer Stückzahl realisiert werden.

Im Folgenden wird die Erfindung anhand der in den Figuren dargestellten Ausführungsbeispiele näher beschreiben und erläutert. Es zeigen:
- FIG 1 und 2: Ausführungsbeispiele für einen vorgeschlagenen Mehrsystemmotor,
- FIG 3 bis 6: verschiedene Variante für die Verbindung mit einem Energieversorgungsnetz und
- FIG 7: einen Aufbau einer Ausführungsform des Mehrsystemmotors.

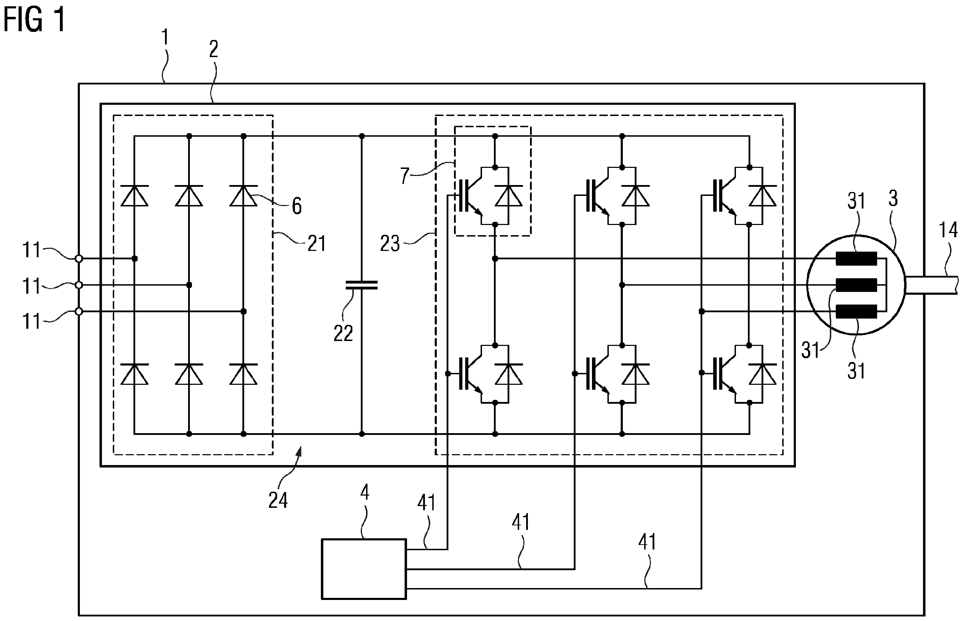

Die FIG 1 zeigt ein erstes Ausführungsbeispiel für einen Mehrsystemmotor 1 mit einer Welle 14. Dieser Mehrsystemmotor 1 weist eine Halbleitereinheit 2, einen Wechselstrommotor 3, Anschlüsse 11 für die Verbindung mit einem hier nicht dargestellten Energieversorgungsnetz 8 und eine Regeleinheit 4 auf. Die Halbleitereinheit 2 verbindet dabei die Anschlüsse 11 des Mehrsystemmotors 1 mit dem Wechselstrommotor 3. Die Welle des Wechselstrommotors 3 bildet gleichzeitig die Welle 14 des Mehrsystemmotors 1.

Die Halbleitereinheit 2 dient zum Umformen des Stromes bzw. der Spannung, Wechselstrom oder Gleichstrom bzw. Wechselspannung oder Gleichspannung, aus dem Energieversorgungsnetz 8 in einen Gleichstrom bzw. Gleichspannung im Gleichspannungszwischenkreis 24. Den Gleichspannungszwischenkreis 24 bildet die gleichspannungsseitige Verbindung der Gleichrichtschaltung 21, der Wechselrichterschaltung 23 und des Zwischenkreiskondensators 22. Die Gleichgrößen, Strom und Spannung, des Gleichspannungszwischenkreises 24 werden dann durch die Wechselrichterschaltung 23 wieder in Wechselgrößen umgeformt, die ein Moment im Motor 3 erzeugen. Dazu sind die Wicklungen 31 des Wechselstrommotors 3 mit den wechselspannungsseitigen Anschlüssen der Wechselrichterschaltung 23 verbunden.

Die Gleichrichtschaltung 21 dient dazu, Wechselgrößen eines Wechselspannungsnetzes in Gleichgrößen umzuwandeln. Bei der Verbindung mit einem Gleichspannungsnetz stellt die Gleichrichtschaltung sicher, dass unabhängig von der Polung der Anschlüsse im Zwischenkreis die gewünschte Polarität der Netzspannung vorliegt. Anders ausgedrückt wird durch die Gleichrichtschaltung ein Verpolungsschutz für die Verbindung mit einem Gleichspannungsnetz realisiert.

Zum Umformen des Stromes durch Gleichrichtschaltung 21 und Wechselrichterschaltung 23 kommen Halbleiter 6,7 zum Einsatz.

Im Beispiel der ungesteuerten Gleichrichtschaltung ist dies eine Brückenschaltung von Dioden 6 und bei der Wechselrichterschaltung 23 abschaltbare Halbleiter 7. Die abschaltbaren Halbleiter 7 werden über ihren Steueranschluss über Ansteuersignale 41 von der Regeleinheit 4 angesteuert, d.h. ein- und ausgeschaltet, so dass an den Wicklungen 31 des Wechselstrommotors 3 eine Spannung mit der Amplitude und Frequenz ansteht, die das gewünschte Moment, einen gewünschten Strom, wie beispielsweise einen gewünschten Netzstrom oder eine gewünschte Kennlinie als Motorverhalten erzeugt. Die Ansteuerung der einzelnen abschaltbaren Halbleiter 7 durch die Regeleinheit erfolgt unabhängig voneinander. Das bedeutet, jeder abschaltbare Halbleiter 7 erhält ein eigenes Ansteuersignal 41. Das Ansteuern der abschaltbaren Halbleiter 7 wird auch Takten genannt.

Zur Entkopplung von Gleichrichtschaltung 21 und Wechselrichterschaltung 23 ist im Gleichspannungszwischenkreis 24 ein Zwischenkreiskondensator 22 angeordnet.

Alternativ zu dem hier dargestellten Ausführungsbeispiel, kann auch die Gleichrichtschaltung 21 als steuerbare Gleichrichtschaltung mit schaltbaren Halbleitern, insbesondere mit abschaltbaren Halbleitern 7, ausgeführt sein.

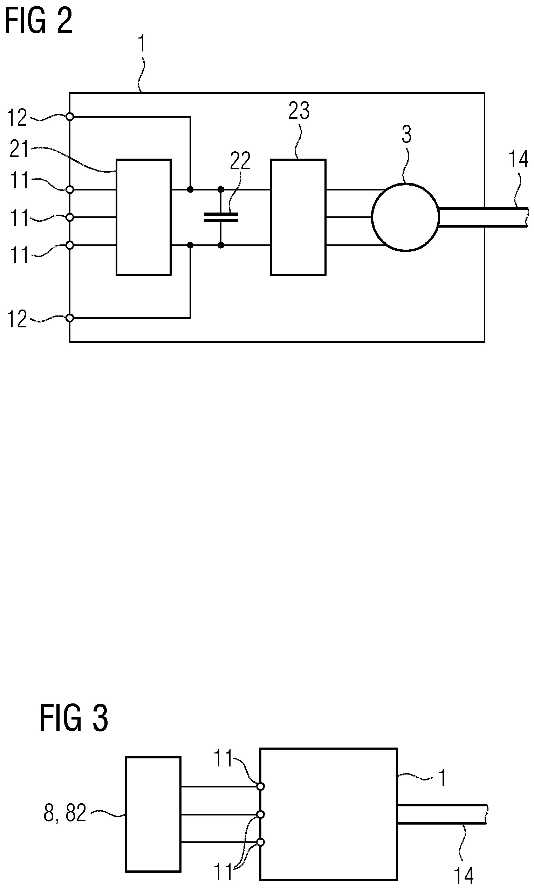

Das Ausführungsbeispiel der FIG 2 entspricht im Wesentlichen dem der FIG 1. Zur Vermeidung von Wiederholungen wird auf die Beschreibung zur FIG 1 sowie auf die dort eingeführten Bezugszeichen verwiesen. Neben den drei Anschlüssen 11 für die Verbindung mit einem Wechsel- oder Gleichspannungsnetz, weist dieses Ausführungsbeispiel weitere Anschlüsse 12 auf, welche den Gleichspannungszwischenkreis 24 direkt, d.h. ohne Verwendung eines Halbleiters 6,7 mit dem anschließbaren Gleichspannungsnetz verbindet. Mit anderen Worten ist die Verbindung zwischen den weiteren Anschlüssen 12 und dem Gleichspannungszwischenkreis 24 halbleiterfrei. Der Vorteil der weiteren Anschlüsse 12 liegt unter anderem darin, dass weniger Verluste im Mehrsystemmotor 1 entstehen, da es nicht zu einem Spannungsabfall des Stromes über die Halbleiter der Gleichrichtschaltung 24 kommt.

Die FIG 3 zeigt die Verbindung des Mehrsystemmotors 1 mit einem Energieversorgungsnetz 8, einem Wechselspannungsnetz 82, das in diesem Ausführungsbeispiel als dreiphasiges Drehstromnetz ausgebildet sein kann. Der innere Aufbau des Mehrsystemmotors 1 kann beispielsweise nach einem Ausführungsbeispiel der Figuren 1 oder 2 ausgebildet sein. Die drei Phasen des Wechselspannungsnetzes 82 sind mit den Anschlüssen 11 des Mehrsystemmotors 1 verbunden.

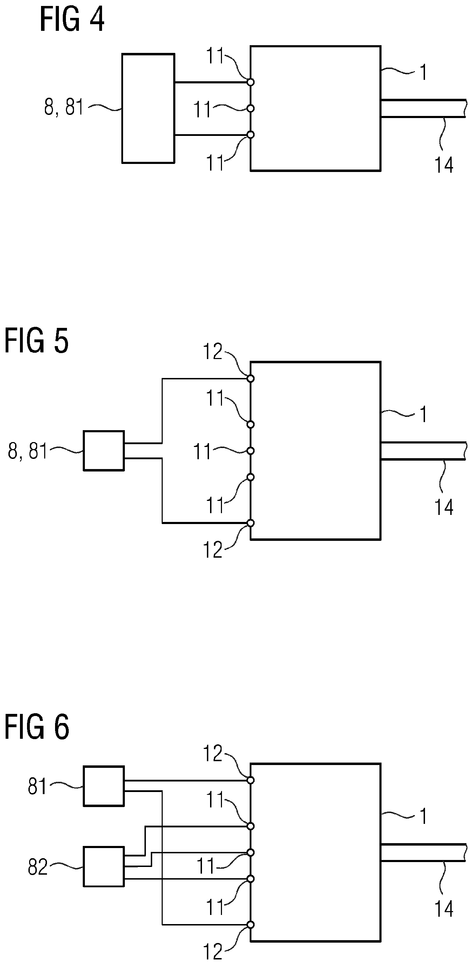

Hingegen zeigt FIG 4 die elektrische Verbindung des Mehrsystemmotors 1 mit einem Energieversorgungsnetz 8, das in diesem Ausführungsbeispiel als Gleichspannungsnetz 81 ausgebildet ist. Zur Vermeidung von Wiederholungen wird auf die Beschreibung zu den Figuren 1 bis 3 sowie auf die dort eingeführten Bezugszeichen verwiesen. Die Netzspannung liegt zwischen den beiden Verbindungen an, die das Gleichspannungsnetz 81 mit den Anschlüssen 11 des Mehrsystemmotors 1 verbinden. Dabei können die beiden Potenziale des Gleichspannungsnetzes 81, zwischen den die Netzspannung anliegt, jeweils mit einem beliebigen der Anschlüsse 11 verbunden werden. Die vorhandene, aber hier nicht dargestellte Gleichrichtschaltung 21 des Mehrsystemmotors 1 sorgt dafür, dass die Netzspannung in der vorgesehenen Polarität mit dem Gleichspannungszwischenkreis 24 elektrisch verbunden ist. Um elektrische Verluste zu minimieren, ist es ebenfalls, wie in FIG 5 dargestellt, möglich, das Gleichspannungsnetz 81 anstelle mit den Anschlüssen 11 über weitere Anschlüsse 12 mit dem Mehrsystemmotor zu verbinden. Zur Vermeidung von Wiederholungen wird auf die Beschreibung zu den Figuren 1 bis 4 sowie auf die dort eingeführten Bezugszeichen verwiesen. Dabei sind die weiteren Anschlüsse 12 direkt, d.h. ohne Halbleiter, also halbleiterfrei, mit dem Gleichspannungszwischenkreis 24 und dem dortigen Zwischenkreiskondensator 22 verbunden. Allerdings muss in dieser Anordnung darauf geachtet werden, dass das positive Potenzial der Netzspannung auch mit dem positiven Potential der Zwischenkreisspannung verbunden ist, da der Verpolungsschutz mittels der Gleichrichtschaltung 21 mit dieser Anordnung umgangen wird.

Als weiteres Ausführungsbeispiel gemäß FIG 6 kann der Mehrsystemmotor 1 gleichzeitig sowohl mit einem ersten Energieversorgungsnetz, das als Gleichspannungsnetz 81 ausgebildet ist, und mit einem zweiten Energieversorgungsnetz, das als Wechselspannungsnetz 82 ausgebildet ist, verbunden sein. Zur Vermeidung von Wiederholungen wird auf die Beschreibung zu den Figuren 1 bis 5 sowie auf die dort eingeführten Bezugszeichen verwiesen. Dabei kann entweder einem der Energieversorgungsnetze 81, 82 elektrische Energie entnommen werden oder je nach Ausbildung der Gleichrichtschaltung 21 auch beiden Energieversorgungsnetzen 81, 82 gleichzeitig. Die in dieser Figur nicht näher dargestellte Gleichrichtschaltung 21, kann die Aufteilung des Energiebezugs von den beiden Energieversorgungsnetzen 81, 82 auf besonders einfache Weise gesteuert oder geregelt aufteilen, wenn die Eingangsschaltung schaltbare, insbesondere abschaltbare Halbleiter 7. aufweist.

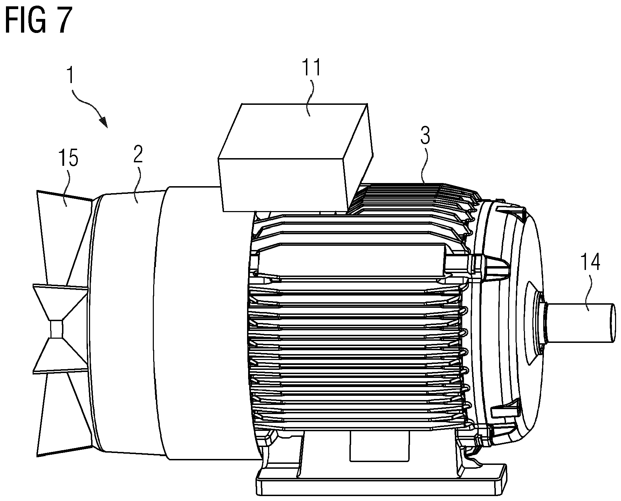

Die FIG 7 zeigt einen Aufbau eines Mehrsystemmotors 1. Bei dem die Halbleitereinheit 2 und der Wechselstrommotor 3 eine bauliche Einheit bilden. Die Kühlung des Mehrsystemmotors 1 erfolgt mittels an der Außenhaut vorbeistreifender Kühlluft. Um die Kühlwirkung zu verbessern weist die Oberfläche des Mehrsystemmotors 1 daher Kühlrippen auf. Der Lüfter 15 erzeugt einen Kühlmittelstrom, bei dem das Kühlmedium, in diesem Fall Luft, sowohl an der Halbleitereinheit 2 als auch am Wechselstrommotor 3 entlangstreift und den Mehrsystemmotor 1 dadurch kühlt.

Zusammenfassend betrifft die Erfindung einen Mehrsystemmotor zum Betreiben an einem Wechselspannungsnetz oder Gleichspannungsnetz. Zur Verbesserung des Betriebs an einem beliebigen Energieversorgungsnetz wird vorgeschlagen, dass der Mehrsystemmotor eine Halbleitereinheit und einen Wechselstrommotor aufweist, wobei die Halbleitereinheit und der Wechselstrommotor eine bauliche Einheit bilden und zumindest teilweise von einem gleichen Kühlmittelstrom durchflossen werden, wobei die Halbleitereinheit eine Gleichrichtschaltung, einen Zwischenkreiskondensator und eine Wechselrichterschaltung aufweist, wobei eine Gleichspannungsseite der Gleichrichtschaltung, eine Gleichspannungsseite der Wechselrichterschaltung und der Zwischenkreiskondensator miteinander verbunden sind und einen Gleichspannungszwischenkreis bilden, wobei wechselspannungsseitige Anschlüsse der Gleichrichtschaltung Anschlüsse des Mehrsystemmotors bilden, wobei wechselspannungsseitige Anschlüsse der Wechselrichterschaltung mit Wicklungen des Wechselstrommotors verbunden sind, wobei die Anschlüsse des Mehrsystemmotors für einen Anschluss mit einem Wechselspannungsnetz oder einem Gleichspannungsnetz eingerichtet sind. Die Erfindung betrifft ferner ein Verfahren zum Betreiben eines derartigen Mehrsystemmotors.

## Patentansprüche

1. Mehrsystemmotor (1) zum Betreiben an einem Wechselspannungsnetz oder einem Gleichspannungsnetz, aufweisend
- eine Halbleitereinheit (2) und
- einen Wechselstrommotor (3),
wobei die Halbleitereinheit (2) und der Wechselstrommotor (3) eine bauliche Einheit bilden und zumindest teilweise von einem gleichen Kühlmittelstrom durchflossen werden, wobei die Halbleitereinheit eine Gleichrichtschaltung (21), einen Zwischenkreiskondensator (22) und eine Wechselrichterschaltung (23) aufweist, wobei eine Gleichspannungsseite der Gleichrichtschaltung (21), eine Gleichspannungsseite der Wechselrichterschaltung (23) und der Zwischenkreiskondensator (22) miteinander verbunden sind und einen Gleichspannungszwischenkreis (24) bilden, wobei wechselspannungsseitige Anschlüsse der Gleichrichtschaltung (21) Anschlüsse (11) des Mehrsystemmotors (1) bilden, wobei wechselspannungsseitige Anschlüsse der Wechselrichterschaltung (23) mit Wicklungen des Wechselstrommotors (3) verbunden sind, wobei die Anschlüsse (11) des Mehrsystemmotors (1) für einen Anschluss mit Gleichspannungsnetz (81) und/oder einem Wechselspannungsnetz (82) eingerichtet sind.

2. Mehrsystemmotor (1) nach Anspruch 1, wobei die Gleichrichtschaltung (21) durch eine ungesteuerte Diodenbrücke gebildet wird.

3. Mehrsystemmotor (1) nach einem der Ansprüche 1 oder 2, wobei Potenziale des Gleichspannungszwischenkreises (24) weitere Anschlüsse (12) des Mehrsystemmotors (1) bilden, wobei die weiteren Anschlüsse (12) für einen Anschluss an ein Gleichspannungsnetz (81) eingerichtet sind.

4. Verfahren zum Betreiben eines Mehrsystemmotors (1) nach einem der Ansprüche 1 bis 3, wobei der Mehrsystemmotor (1) mit einem Gleichspannungsnetz (81) oder einem Wechselspannungsnetz (82) verbunden ist, wobei im Falle eines Wechselspannungsnetzes (82) eine an den Anschlüssen (11) anliegende Wechselspannung in eine Gleichspannung im Gleichspannungszwischenkreis (24) gleichgerichtet wird und im Falle eines Gleichstromnetzes (81) eine an den Anschlüssen (11) oder an den weiteren Anschlüssen (12) anliegende Gleichspannung in eine Gleichspannung in den Gleichspannungszwischenkreis (24) übertragen wird, wobei aus der Gleichspannung im Gleichspannungszwischenkreis (24) mittels der Wechselrichterschaltung (23) eine Spannung an den wechselspannungsseitigen Anschlüssen der Wechselrichterschaltung (23) erzeugt wird.

5. Verfahren nach Anspruch 4, wobei die Amplitude und/oder die Frequenz der an den wechselseitigen Anschlüssen der Wechselrichterschaltung (23) erzeugten Spannung in Abhängigkeit von in einer Regeleinheit (4) gespeicherten Parametern und/oder erfassten Messwerten gesteuert oder geregelt wird.

6. Verfahren nach Anspruch 5, wobei die Drehzahl oder das Drehmoment des Wechselstrommotors (3) in Abhängigkeit von der Spannung an den Anschlüssen (11) und/oder weiteren Anschlüssen (12) des Mehrsystemmotors (1) gesteuert oder geregelt wird.

7. Verfahren nach einem der Ansprüche 5 oder 6, wobei mittels der Regeleinheit (4) das Drehmoment des Wechselstrommotors derart gesteuert wird, dass vorgegebene Grenzwerte für den Netzstrom unterschritten werden.

8. Verfahren nach einem der Ansprüche 5 bis 7, wobei mittels der Regeleinheit (4) eine Beschleunigung des Mehrsystemmotors (1) mit vorgegebenen Netzströmen erfolgt.

9. Verfahren nach einem der Ansprüche 5 bis 8, wobei mittels der Regeleinheit (4) zumindest in einem stationären Betriebspunkt ein ungesteuerter Betrieb eines DC-Motors an einem Gleichspannungsnetz oder eines AC-Motors an einem Wechselspannungsnetz nachgebildet wird.
